# EUROPÄISCHE PATENTSCHRIFT

(11) **EP 0 507 259 B1**
(45) Veröffentlichungstag und Bekanntmachung des Hinweises auf die Patenterteilung: **12.03.1997**
(21) Anmeldenummer: 92105555.4
(22) Anmeldetag: 31.03.1992
(51) Int. Cl.: B25B 7/12, B23D 29/02

(54) **Mechanische Kraftübertragung für ein Handwerkzeug**
Mechanical transmission of force for handtools
Transmission mécanique d'efforts pour outils à main

(30) Priorität: 05.04.1991 DE 4111086
(43) Veröffentlichungstag der Anmeldung: 07.10.1992
(73) Patentinhaber: Laux, Friedrich Günther, D-14109 Berlin (DE)
(72) Erfinder: Laux, Friedrich Günther, D-14109 Berlin (DE)
(74) Vertreter: Staeger, Sigurd, Dipl.-Ing.

(56) Entgegenhaltungen:
- EP-A- 0 186 222
- JP-A- 6 294 214
- US-A- 2 705 432
- US-A- 3 224 303
- US-A- 3 885 309
- US-A- 4 899 445

## Beschreibung

Die Erfindung betrifft ein Handwerkzeug nach dem Oberbegriff des Anspruchs 1.

Ein solches gattungsgemäßes Handwerkzeug ist aus der JP-A 62-94214 bekannt, wobei ein erster Handhebel feststehend und ein Zweiter Handhebel an einem bezüglich des ersten Handhebels ortsfesten Gelenk schwenkbar gehalten ist, um durch seine Betätigung das Arbeitsende des Handwerkzeugs auszulösen. Ein Ende einer freien Schwinge ist mit dem schwenkbaren Handhebel über einen Drehpunkt verbunden, der zwischen dem Gelenk und einem Kraftangriffspunkt, beispielsweise der Hand, liegt. Am anderen Ende der freien Schwinge ist an einem Gelenkpunkt eine Zahnschwinge mit einem ihrer Enden drehbar gehalten. Das andere Ende der Zahnschwinge ist über ein Gelenk mit einem Ende einer weiteren Schwinge verbunden, die ihrerseits fest an einem Drehpunkt an einem Gehäuse gelagert ist.

Bei dieser Konstruktion handelt es sich somit um ein Gelenkviereck mit nur einem statisch festen Punkt, nämlich dem letzteren Drehpunkt der weiteren Schwinge am Gehäuse. Die Kraftübertragung vom zweiten Handhebel zum Arbeitsende des Handwerkzeugs erfolgt bei dieser Konstruktion über die gelenkig mit dem Handhebel verbundene Zahnschwinge, die Teil des Gelenkvierecks ist.

Aus der EP-PS 186 222 ist ein Kabelschneidgerät bekannt. Ein als verzahntes Drehmesser ausgebildetes Werkzeugteil wird mit einer Vorschubklinke intermittierend in Bewegung gesetzt. Die Vorschubklinke ist über eine exzentrisch gelagerten Gelenkbolzen mit dem Schwenkhebel verbunden. Je kleiner die Exzentrizität zwischen den geometrischen Zentren des zylindrischen Gelenkszapfens und des diesen umgebenden zylindrischen Blockes ist, desto größere Vorschubkräfte werden über die Vorschubklinke auf die damit am Drehmesser kämmende Verzahnung übertragen.

Der Aufbau dieser bekannten Handwerkzeuge ist relativ aufwendig.

Der Erfindung liegt die Aufgabe zugrunde, ein Handwerkzeug der eingangs erwähnten Art unter möglichst geringen Kosten und mit einem relativ geringen Gewicht zu schaffen, das insbesondere im "Einhandbetrieb" unter räumlich beengten Verhältnissen verwendet werden kann.

Die Aufgabe wird durch ein Handwerkzeug nach Anspruch 1 gelöst.

Die besonders einfache Ausführung der Übertragung und der damit zusammenwirkenden Teile führt dazu, daß ein Handwerksgerät mit einer Gesamtlänge von z.B.etwa 25 cm geschaffen wird, welches, wie bereits bemerkt, auch im "Einhandbetrieb" betrieben werden kann.

Nach einer besonders bevorzugten Ausführungsform der Erfindung ist der Krümmungsmittelpunkt der Stirnfläche in Bezug auf die Mittelachse des Schwenkhebels und ggf. des Mittelpunkts des Gelenks des Schwenkhebels exzentrisch angeordnet. Diese für die Erzeugung großer Schneid- oder Preßkräfte vorgesehene Anordnung wird weiter unten näher beschrieben. Der Schwenkhebel kann gegen den Druck mindestens einer Feder, vorzugsweise einer Zugfeder, in Wirkstellung bringbar sein. Diese als Ausgangsstellung für die wiederholte Betätigung des Schwenkhebels erforderliche Stellung des letzteren kann selbstverständlich auch mit anderen geeigneten Mitteln unterstützt werden.

Zweckmäßigerweise ist die Schwinge in U-Form ausgebildet und trägt den Schwenkhebel zwischen den freien Enden ihrer Schenkel. Der Schwenkhebel kann als Schubelement ausgebildet sein.

Nach einer zweckmäßigen Ausführungsform ist der Schwenkhebel mit einer Rastung für eine Freilaufstellung versehen. Auch kann der Schwenkhebel mit einem Anschlag für die Eingriffsstellung versehen sein.

Besonders zweckmäßig hat sich die Ausgestaltung der Erfindung dahingehend erwiesen, daß sämtliche Teile der Kraftübertragung und des beweglichen Teils zwischen zwei Platten angeordnet sind, von denen eine abnehmbar ist. Hierbei ist es möglich, daß sämtliche Teile der Kraftübertragung auf einer Seite einer Tragplatte angeordnet sind.

Nach einer bevorzugten Ausführungsform der Erfindung ist der Steg der U-förmigen Schwinge drehbar auf einem Distanzbolzen zwischen der Tragplatte und der Abdeckplatte gehalten. Auch können der Schwenkhebel und das bewegliche zweite Werkzeugteil mit jeweils miteinander in Eingriff bringbaren Zähnen versehen sein. Darüberhinaus kann eine federnd gelagerte Halteklinke für das bewegliche zweite Werkzeugteil vorgesehen sein.

Bevorzugterweise ist ein drehbarer Sperrbolzen mit einem in Richtung des Schwenkhebels weisenden Vorsprung zur Ruhearretierung wahlweise am Schwenkhebel einrastbar. Auch ist es möglich, daß mindestens ein Zwischenelement zwischen dem Schwenkhebel und dem anzutreibenden zweiten Werkzeugteil eingeschaltet ist.

Wie bereits oben erwähnt,ist eine Anwendung der Erfindung bei einem Kabelschneider besonders zweckmäßig. In diesem Fall kann das bewegliche zweite Werkzeugteil als Drehmesser ausgebildet sein.

Schließlich ist es möglich, daß der Schwenkhebel im Griffbereich mit spannungsisolierenden, ggf. mehrschichtigen Formgriffen versehen ist.

Auf der Zeichnung ist eine beispielsweise Ausführungsform der Erfindung dargestellt; sie wird nachstehend näher erläutert.

Es zeigt:
- Fig. 1: eine Draufsicht auf eine Ausführungsform der Erfindung, bei der die Abdeckplatte weggelassen ist,
- Fig. 2: eine Seitenansicht auf dieselbe Ausführungsform,
- Fig. 3: den oberen Teil der in Fig. 1 dargestellten Ausführungsform in Draufsicht jedoch mit dem Abdeckteil,

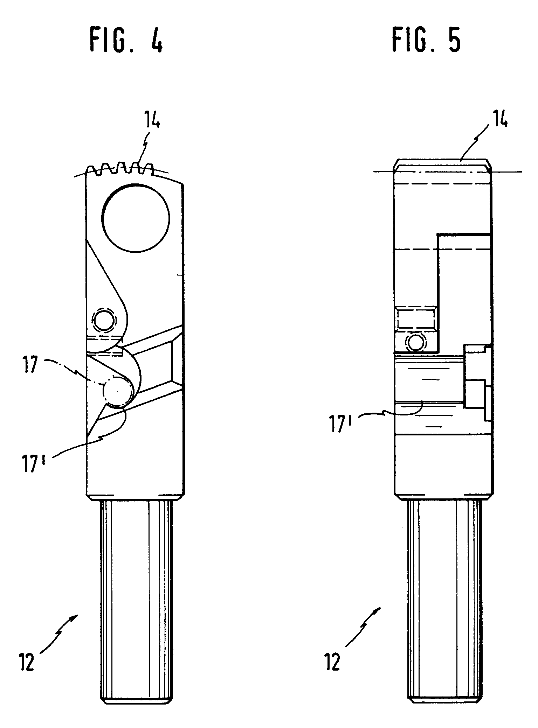

- Fig. 4: ein Detail der Ausführungsform nach Fig. 1 bis 3 in vergrößertem Maßstab,
- Fig. 5: das in Fig. 4 dargestellte Detail von der Seite gesehen,
- Fig. 6: ein weiteres Detail der in Fig. 1 dargestellten Ausführungsform,
- Fig. 7: eine Seitenansicht auf das in Fig. 6 dargestellte Detail,
- Fig. 8: eine Funktionsskizze und
- Fig. 9: ein weiteres Detail der Ausführungsform nach Fig. 1 in Seitenansicht.

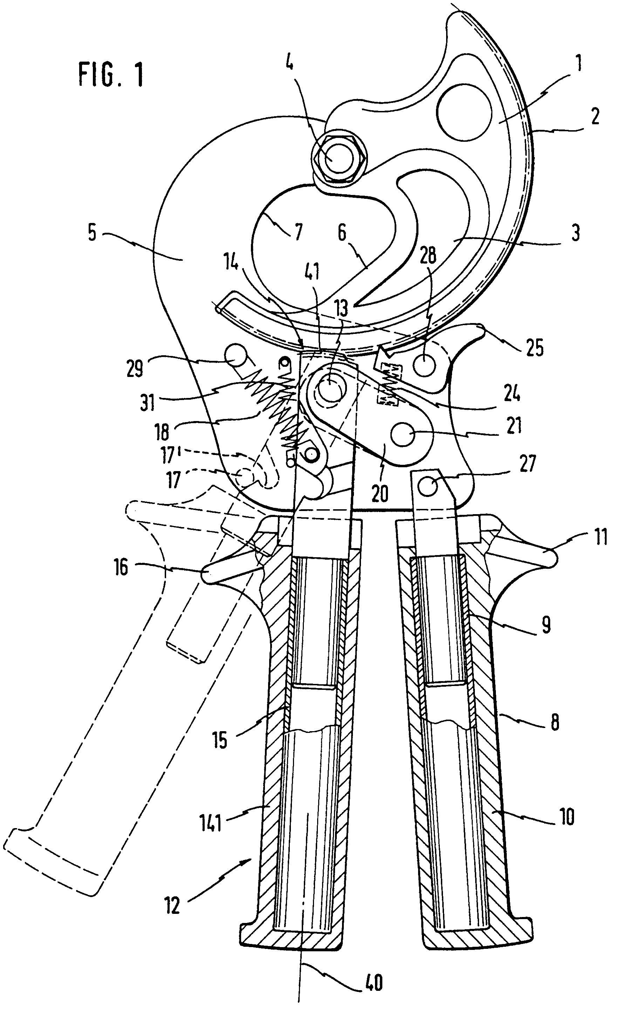

Das in Fig. 1 dargestellte Ausführungsbeispiel für die Anwendung der erfindungsgemäßen Kraftübertragung zeigt einen Kabelschneider mit einem Drehmesser 1, welches eine annähernd in Halbkreisform verlaufende Verzahnung 2 und eine Ausnehmung 3 aufweist. Das um einen Gelenkbolzen 4 drehbare Drehmesser 1 wirkt mit einem unbeweglichen als Tragplatte ausgebildeten ersten Werkzeugteil 5 zusammen und stellt ein gegenüber letzterem bewegliches zweites Werkzeugteil 1 dar.

An der Innenseite des Drehmessers 1 kann eine Schneide 6 als Arbeitsfläche vorgesehen sein. Auch an der Innenseite des festen Werkzeugteils 5 kann eine entsprechende Schneide 7 als Arbeitsfläche angeordnet sein.

Am als Tragplatte ausgebildeten ersten Werkzeugteil 5 ist eine Handhabe 8 unbeweglich befestigt. Eine Traghülse 9 ist von einem spannungsisolierenden ggf. mehrschichtigen Formgriff 10 umgeben und weist eine Daumenrast 11 auf.

In Bezug auf die Tragplatte bzw. das erste Werkzeugteil 5 und die Handhabe 8 verschenkbar angeordnet ist ein Schwenkhebel 12, welcher um ein Gelenk mit einer Drehachse 13 verdreht werden kann. Die Stirnseite 14 des Schwenkhebels ist mit einer Verzahnung 41 versehen, die mit der Verzahnung 2 des zweiten Werkzeugteils in Form des Drehmessers intermittierend in Eingriff bringbar ist.

Der Schwenkhebel 12 weist an seinem freien Ende, d.h. also im Griffbereich einen spannungsisolierenden ggf. mehrschichtigen Formgriff 141 auf, welcher aus einem weiter unten näher beschriebene Hülse 15 aufschiebbar ist und eine Daumenrast 16 aufweist.

Der Schwenkhebel 12 ist auch in einer strichierten Lage seiner Ausgangsstellung dargestellt, d.h. also in einer Stellung, in welcher ein Eingriff der Verzahnung 41 mit der Verzahnung 2, wie weiter unten näher beschrieben,erfolgt.

Vor diesem Eingriff ist der Schwenkhebel 12 aus seiner (nicht eingreifenden) Rastung am Raststift 17 zu lösen.

Eine Zugfeder 18 zieht den Schwenkhebel 12 in die Ausgangsstellung, aus welcher er durch Betätigen in Richtung auf die Handhabe 8 verschwenkbar ist.

Die Gelenkverbindung des Schwenkhebels liegt nur über eine Schwinge 20 vor, die wiederum um ein Gelenk 21 verschwenkbar ist und zwei Schenkel 22, 23 aufweist, zwischen welchen der Schwenkhebel durch den Gelenkbolzen mit der Drehachse 13 gehalten ist.

Gegen den Druck einer Feder 24 ist eine Halteklinke 25 jeweils in den Zähnen 2 des zweiten Werkzeugteils 1 in Form des Drehmessers einrastbar. Diese Einrastung erfolgt jedesmal nachdem eine Schwenkbewegung des Schwenkhebels 12 in Richtung auf die Handhabe 8 - wie mit vollen Linien ausgezogen - durchgeführt ist,so daß sich das Drehmesser 1 nicht entgegengesetzt zum Uhrzeigersinn zurückdrehen kann.

Eine Sperrklinke 26 rastet in dieser Stellung des Schwenkhebels 12 ein bzw. wird durch eine Rändlung verdreht, daß der Schwenkhebel die in Fig. 1 mit ausgezogenen Linien gezeigte Stellung nicht selbsttätig verlassen kann.

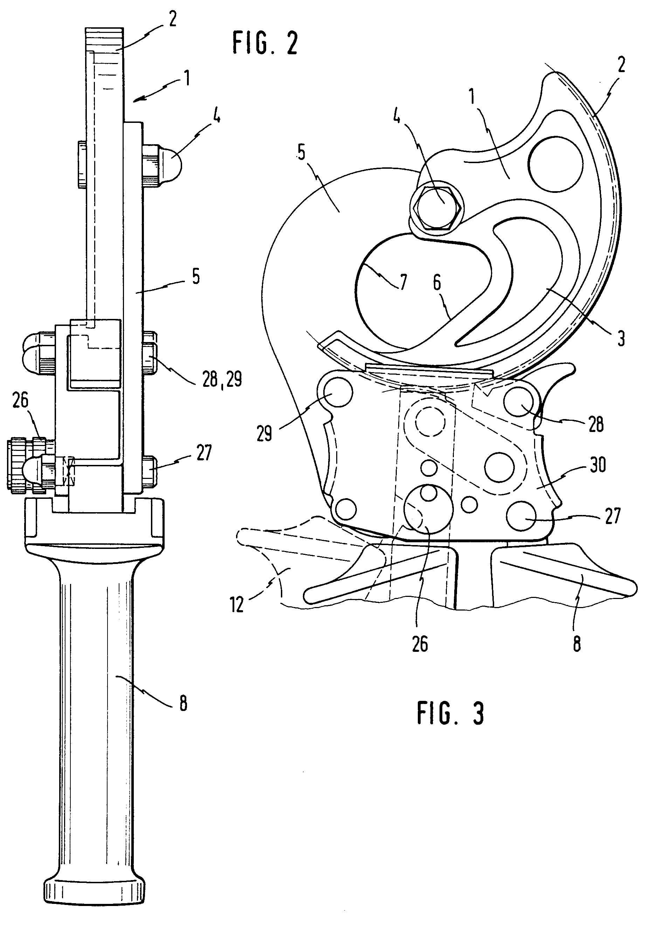

Wie aus Fig. 3 ersichtlich ist, sind die eben beschriebenen beweglichen Teile, die alle auf einer Seite der Tragplatte bzw. des ersten Werkzeugteils 5 angeordnet sind,durch eine Abdeckplatte 30 verdeckt, aus welcher lediglich neben der Sperrklinke 26 die Halteschrauben 27, 28 und 29 vorkragen: die Schraube 29 dient als Widerlager für die Zugfeder 18, die Schraube 28 bildet das Gelenk der Halteklinke 25 und die Schraube 27 ist die Befestigungsschraube für die Handhabe 8.

Zu ergänzen ist noch, daß eine zweite Zugfeder 31 vorgesehen ist, welche den Schwenkhebel 12 mit der Zahnung 2 des Drehmessers in Eingriff bringt.

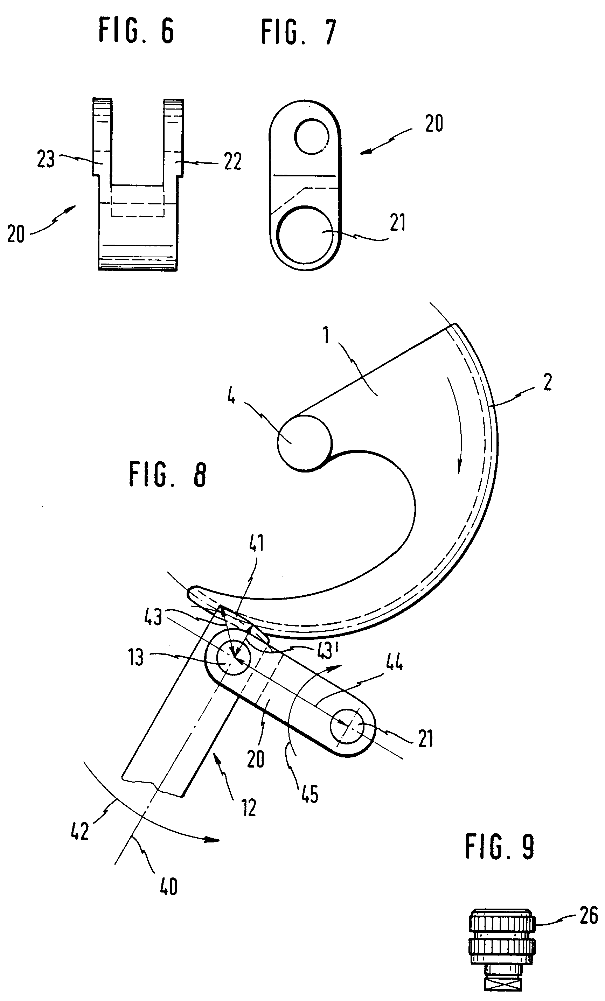

Wie insbesondere aus Fig. 8 ersichtlich ist, ist der Gelenkbolzen mit der Drehachse 13 des Schwenkhebels 12 exzentrisch gelagert, und zwar exzentrisch in Bezug auf die Mittelachse des Schwenkhebels und den an der Stirnfläche des Schwenkhebels mit Mittelachse 40 vorgesehenen Zähnen der Verzahnung 41. Die Schwinge 20 ist in einem Gelenkbolzen 21 zwischen der Tragplatte 5 und der Abdeckplatte 30 drehbar gelagert. Dieser Gelenkbolzen kann, wie aus Fig. 1 ersichtlich, aus einem zylindrischen Zapfen mit einem runden Nadellager bestehen.

Bei einer Verdrehnung des Schwenkhebels 12 in Pfeilrichtung 42 (Fig. 8) beginnt die Außenverzahnung 41 des Schwenkhebels 12 an der Verzahnung 2 des Drehmessers 1 abzurollen und gleichzeitig, entsprechend der Streckung der Hebellängen 43, 44 einen Vorschub zu erzeugen. Die Hebellänge 43 ist mit dem entsprechenden Pfeil in Fig. 8 angedeutet und entspricht dem Abstand des Drehmittelpunktes der Drehachse 13 und dem Zahneingriff. Die Hebellänge 44 ist gleich dem Abstand der Mittelpunkte beider Drehgelenke 13 und 21. Nach der Verdrehung des Schwenkhebels 12 ist der Abstand Drehachse 13 und Verzahnung mit 43' angegeben.

Während sich mit der Streckung des von 43 und 44 gebildeten "Kniehebels" der Vorschubweg dem Nullwert nähert, wächst der von der Verzahnung geleistete Vorschubanteil von nahe Null beim anfänglichen Überrollen zum Übersetzungswert mit den variablen Hebellängen 43 bis 43' am Antrieb und 44 am Drehmesser, Zahnrad o.dgl.

Der Gesamtverlauf des gewünschten Vorschubes kann je nach Auslegung mehr oder minder linear gestaltet und somit besonderen Erfordernissen bei Preß- oder Schneidvorgängen angepaßt werden.

Der Drehpunkt der Schwinge 20 ist so zu bestimmen, daß durch die Drehkraft am Schwenkhebel 12 als Resultierende eine Eingriffskraft in Richtung des Pfeiles 45 (Fig. 8) an der Schwinge wirksam wird, damit sich der Zahneingriff des Schwenkhebels 12 unter Belastung nicht löst.

Nach Erreichen der mit ausgezogenen Linien in Fig. 1 dargestellten Stellung des Schwenkhebels 12 kann der Schwenkhebel 12 entweder mit der Sperrklinke 26 arretiert oder in die mit strichierten Linien dargestellte Stellung in Fig. 1 zurückgeschwenkt werden. Die Halteklinke 25 verhindert dabei einen Rücklauf des Drehmessers 1. Nach erfolgtem Rückschwenken des Schwenkhebels 12 löst sich die Schwinge 20 aus der stillstehenden Drehmesserverzahnung.

In der Ruhestellung bzw. ausgeschwenkten Stellung des Schwenkhebels 12, d.h. wenn der Raststift 17 in die Rastöffnung 17' eingreift, kann die Halteklinke 25 gelöst werden, so daß das Drehmesser bzw. das zweite Werkzeugteil 1 in eine beliebige Lage verdreht werden kann.

## Patentansprüche

1. Handwerkzeug mit einer mechanisch wirkenden Kraftübertragung zwischen einem ersten Werkzeugteil (5) und einem relativ zu letzterem beweglichen zweiten Werkzeugteil (1),
wobei der erste Werkzeugteil (5) mit einer ersten Handhabe (8) und einer ersten Arbeitsfläche (7) ausgestattet ist,
wobei der zweite, relativ zum ersten Werkzeugteil (5) bewegliche Werkzeugteil (1) mit dem ersten Werkzeugteil (5) schwenkbar verbunden, mit einer zweiten Arbeitsfläche (6) ausgestattet und mittels einer zweiten Handhabe in der Form eines um eine Drehachse (13) schwenkbaren Schwenkhebels (12) betätigbar ist,
wobei die beiden Werkzeugteile (5, 1) derart gekoppelt sind, daß durch die Arbeitsflächen (7, 6) auf ein dazwischen eingebrachtes stangen- oder rohrförmiges Werkstück bei einer Verschwenkung des zweiten Werkzeugteils (1) gegenüber dem ersten Werkzeugteil (5) eingewirkt wird, und
wobei eine durch eine Pendelbewegung des Schwenkhebels (12) um seine Drehachse (13) intermittierend ausgeübte Kraft durch die Kraftübertragung auf das zweite Werkzeugteil (1) übertragen wird,
**dadurch gekennzeichnet**,
daß die Drehachse (13) des Schwenkhebels (12) auf dem freien Ende einer drehbaren Schwinge (20) liegt, die über ihr anderes Ende an einem gegenüber dem zweiten Werkzeugteil (1) stationären Teil des Werkzeugs angelenkt ist, so daß die Position der Drehachse (13) des Schwenkhebels (12) von der Drehlage der Schwinge (20) abhängig ist, und
daß die Kraftübertragung vom Schwenkhebel (12) auf das bewegliche zweite Werkzeugteil (1) mittelbar oder unmittelbar über eine jenseits der Drehachse (13) angeordnete und dem beweglichen zweiten Werkzeugteil (1) zugewandte Stirnfläche (14) des Schwenkhebels (12) erfolgt.

2. Handwerkzeug nach Anspruch 1, **dadurch gekennzeichnet**, daß die Stirnfläche (14) gekrümmt ist und ihr Krümmungsmittelpunkt bezüglich der Mittelachse des Schwenkhebels (12) und des Mittelpunkts der Drehachse (13) des Schwenkhebels (12) exzentrisch angeordnet ist.

3. Handwerkzeug nach Anspruch 1 oder 2, **dadurch gekennzeichnet**, daß der Schwenkhebel (12) gegen den Druck mindestens einer Feder, vorzugsweise einer Zugfeder (18), in Wirkstellung bringbar ist.

4. Handwerkzeug nach einem der vorhergehenden Ansprüche, **dadurch gekennzeichnet**, daß die Schwinge (20) in U-Form ausgebildet ist und den Schwenkhebel (12) zwischen den freien Enden ihrer Schenkel trägt.

5. Handwerkzeug nach einem der vorhergehenden Ansprüche, **dadurch gekennzeichnet**, daß der Schwenkhebel (12) als Schubelement ausgebildet ist.

6. Handwerkzeug nach einem der vorhergehenden Ansprüche, **dadurch gekennzeichnet**, daß der Schwenkhebel (12) mit einer Rastung für eine Freilaufstellung versehen ist.

7. Handwerkzeug nach einem der vorhergehenden Ansprüche, **dadurch gekennzeichnet**, daß der Schwenkhebel (12) mit einem Anschlag für eine Eingriffsstellung versehen ist, in der er eine Kraft durch eine Pendelbewegung um seine Drehachse (13) intermittierend durch die Kraftübertragung auf das zweite Werkzeugteil (1) überträgt.

8. Handwerkzeug nach einem der vorhergehenden Ansprüche, **dadurch gekennzeichnet**, daß das erste Werkzeugteil als Tragplatte (5) ausgebildet ist, und daß sämtliche Teile der Kraftübertragung auf einer Seite der Tragplatte (5) angeordnet sind.

9. Handwerkzeug nach Anspruch 8, **dadurch gekennzeichnet**, daß sämtliche Teile der Kraftübertragung zwischen der Tragplatte (5) und einer abnehmbaren Abdeckplatte (30) angeordnet sind.

10. Handwerkzeug nach nach Anspruch 9, **dadurch gekennzeichnet**, daß der Steg der U-förmigen Schwinge (20) drehbar auf einem Gelenkbolzen (21) zwischen der Tragplatte (5) und der Abdeckplatte (30) gehalten ist.

11. Handwerkzeug nach einem der vorhergehenden Ansprüche, **dadurch gekennzeichnet**, daß der Schwenkhebel (12) und das zweite Werkzeugteil (1) jeweils mit miteinander in Eingriff bringbaren Zähnen (41; 2) versehen sind.

12. Handwerkzeug nach einem der vorhergehenden Ansprüche, **dadurch gekennzeichnet**, daß eine federbeaufschlagte Halteklinke (25) für das zweite Werkzeugteil (1) vorgesehen ist.

13. Handwerkzeug nach einem der vorhergehenden Ansprüche, **dadurch gekennzeichnet**, daß eine drehbare Sperrklinke (26) mit einem in Richtung auf den Schwenkhebel (12) weisenden Vorsprung an letzterem zu dessen Ruhearretierung wahlweise einrastbar ist.

14. Handwerkzeug nach einem der vorhergehenden Ansprüche, **dadurch gekennzeichnet**, daß mindestens ein Zwischenelement zwischen den Schwenkhebel (12) und das zweite Werkzeugteil (1) eingeschaltet ist.

15. Handwerkzeug nach einem der vorhergehenden Ansprüche, **dadurch gekennzeichnet**, daß das zweite Werkzeugteil (1) als Drehmesser ausgebildet ist.

16. Handwerkzeug nach einem der vorhergehenden Ansprüche, **dadurch gekennzeichnet**, daß mindestens der Schwenkhebel (12) einen Griffbereich enthält, in dem er mit spannungsisolierenden, ggf. mehrschichtigen Formgriffen (141) versehen ist.

## Claims

1. A hand tool with mechanically acting force transmission between a first tool part (5) and a second tool part (1) movable relative to the former,
wherein the first tool part (5) is provided with a first handle (8) and first working surface (7),
wherein the second tool part (1) movable relative to the first tool part (5) is pivotally connected to the first tool part (5), is provided with a second working surface (6) and is operable by means of a second handle in the form of a pivoted lever (12) turning about an axis of rotation (13),
wherein the two tool parts (5, 1) are so coupled that a rod-shaped or tubular workpiece placed between the working surfaces (7, 6) is engaged thereby on swinging the second tool part (1) relative to the first tool part (5), and
wherein a force intermittently exerted by to and fro swinging movement of the pivoted lever (12) about its axis of rotation (13) is transferred to the second tool part (1) by the force transmission,
characterized in that
the axis of rotation (13) of the pivoted lever (12) is on the free end of a rotatable link (20), which is articulated at its other end to a part of the tool stationary relative to the second tool part (1), so that the position of the axis of rotation (13) of the pivoted lever (12) is dependent on the rotational position of the link (20), and
in that the force transmission from the pivoted lever (12) to the movable second tool part (1) is effected indirectly or directly through an end surface (14) of the pivoted lever (12) facing the movable second tool part (1) on that side of the axis of rotation (13).

2. A hand tool according to claim 1, characterized in that the end surface (14) is curved and its centre of curvature is arranged eccentrically relative to the central axis of the pivoted lever (12) and the centre of the axis of rotation (13) of the pivoted lever (12).

3. A hand tool according to claim 1 or 2, characterized in that the pivoted lever (12) can be brought into operative position against the force of at least one spring, preferably a tension spring (18).

4. A hand tool according to any of the preceding claims, characterized in that the link (20) is U-shaped and carries the pivoted lever (12) between the free ends of its limbs.

5. A hand tool according to any of the preceding claims, characterized in that the pivoted lever (12) is formed as a thrust element.

6. A hand tool according to any of the preceding claims, characterized in that the pivoted lever (12) is provided with a detent for a free-running setting.

7. A hand tool according to any of the preceding claims, characterized in that the pivoted lever (12) is provided with a stop for an engagement position, in which it transfers a force intermittently through a to and fro swinging movement about its axis of rotation (13), to the second tool part (1), through the force transmission.

8. A hand tool according to any of the preceding claims, characterized in that the first tool part is in the form of a support plate (5) and in that all parts of the force transmission are arranged on one side of the support plate (5).

9. A hand tool according to claim 8, characterized in that all parts of the force transmission are arranged between the support plate (5) and a removable cover plate (30).

10. A hand tool according to claim 9, characterized in that the web of the U-shaped link (20) is retained rotatably on a hinge pin (21) between the support plate (5) and the cover plate (30).

11. A hand tool according to any of the preceding claims, characterized in that the pivoted lever (12) and the second tool part (1) are each provided with teeth (41; 2) which can be brought into engagement with one another.

12. A hand tool according to any of the preceding claims, characterized in that a spring-loaded retaining pawl (25) is provided for the second tool part (1).

13. A hand tool according to any of the preceding claims, characterized in that a rotatably detent pawl (26) is selectively engageable with the pivoted lever (12) by means of a projection facing in the direction thereof, for holding it at rest.

14. A hand tool according to any of the preceding claims, characterized in that at least one intermediate element is fitted between the pivoted lever (12) and the second tool part (1).

15. A hand tool according to any of the preceding claims, characterized in that the second tool part (1) is in the form of a rotary blade.

16. A hand tool according to any of the preceding claims, characterized in that at least the pivoted lever (12) has a grip region in which it is provided with voltage-insulating moulded grips (141) which are if desired of multi-layer form.

## Revendications

1. Outil manuel avec un mécanisme de transmission à action mécanique entre une première partie d'outil (5) et une seconde partie d'outil (1) mobile par rapport à la première, la première partie d'outil (5) étant dotée d'une première poignée (8) et d'une première face de travail (7), la seconde partie d'outil (1) mobile par rapport à la première partie d'outil (5) étant raccordée avec une aptitude de pivotement à la première partie d'outil (5), cette seconde partie d'outil étant pourvue d'une seconde face de travail (6) et pouvant être actionnée par l'intermédiaire d'une seconde poignée adoptant la forme d'un levier pivotant (12) qui pivote autour d'un pivot (13), les deux parties d'outil (5, 1) étant accouplées de façon à ce que les faces de travail (7, 6) puissent agir sur une pièce en forme de tige ou de tube interposée entre elles, lors d'un pivotement de la seconde partie d'outil (1) par rapport à la première (5), l'outil étant agencé de manière qu'une force exercée par intermittence par un mouvement pendulaire du levier pivotant (12) autour de son pivot (13) est transmise à la seconde partie d'outil (5) par le mécanisme de transmission, caractérisé en ce que le pivot (13) se trouve à l'extrémité libre d'une bielle oscillante (20) rotative, qui est articulée par son autre extrémité à une partie de l'outil, immobile par rapport à la seconde partie d'outil (1), de sorte que la position du pivot (13) du levier pivotant (12) dépend de la position de rotation de la bielle oscillante (20), et en ce que la transmission de force du levier pivotant (12) à la seconde partie d'outil (1) mobile se fait indirectement ou directement par l'intermédiaire d'une face frontale (14) du levier pivotant (12) disposée de l'autre côté du pivot (13) et dirigée vers la seconde partie d'outil (1) mobile.

2. Outil manuel selon la revendication 1, caractérisé en ce que la face frontale (14) est incurvée et en ce que son centre de courbure est excentré par rapport à l'axe central du levier pivotant (12) et au centre du pivot (13) du levier pivotant (12).

3. Outil manuel selon l'une des revendications 1 ou 2, caractérisé en ce que le levier pivotant (12) peut être amené en position de travail en surmontant la résistance opposée par au moins un ressort, de préférence un ressort de traction (18).

4. Outil manuel selon l'une des revendications précédentes, caractérisé en ce que la bielle oscillante (20) est réalisée sous forme de U et porte le levier pivotant (12) entre les extrémités libres de ses branches.

5. Outil manuel selon l'une des revendications précédentes, caractérisé en ce que le lever pivotant (12) est réalisé sous forme d'élément de poussée.

6. Outil manuel selon l'une des revendications précédentes, caractérisé en ce que le levier pivotant (12) est pourvu d'un cran pour une mise en position neutre.

7. Outil manuel selon l'une des revendications précédentes, caractérisé en ce que le levier pivotant (12) est muni d'une butée pour une position d'engrènement dans laquelle il transmet une force par intermittence à la seconde partie d'outil (1), par un mouvement pendulaire autour de son pivot, au travers du mécanisme de transmission de force.

8. Outil manuel selon l'une des revendications précédentes, caractérisé en ce que la première partie d'outil est réalisée sous forme d'embase (5) et en ce que toute les pièces du mécanisme de transmission de force sont assemblées sur une face de l'embase (5).

9. Outil manuel selon la revendication 8, caractérisé en ce que toutes les pièces du mécanisme de transmission de force sont assemblées entre l'embase (5) et une plaquette de recouvrement amovible (30).

10. Outil manuel selon la revendication 9, caractérisé en ce que la barrette de la bielle oscillante (20) en forme de U est retenue avec une aptitude de rotation sur un axe d'articulation (21) entre l'embase (5) et la plaque de recouvrement (30).

11. Outil manuel selon l'une des revendications précédentes, caractérisé en ce que le lever pivotant (12) et la seconde partie d'outil (1) sont munis de dents (41; 2) qui peuvent être mises en prise les unes avec les autres.

12. Outil manuel selon l'une des revendications précédentes, caractérisé en ce qu'il est prévu un cliquet de maintien (25) mû par ressort pour la seconde partie d'outil (1).

13. Outil manuel selon l'une des revendications précédentes, caractérisé en ce qu'un cliquet d'arrêt (26) rotatif peut optionnellement venir s'enclencher sur le lever pivotant (12) au moyen d'une saillie orientée dans la direction de ce dernier, en vue de le bloquer en position de repos.

14. Outil manuel selon l'une des revendications précédentes, caractérisé en ce qu'au moins un élément intermédiaire est interposé entre le lever pivotant (12) et la seconde partie d'outil (1).

15. Outil manuel selon l'une des revendications précédentes, caractérisé en ce que la seconde partie d'outil (1) est réalisée sous forme de couteau rotatif.

16. Outil manuel selon l'une des revendications précédentes, caractérisé en ce qu'au moins le levier pivotant (12) comporte une zone de préhension dans laquelle il est muni de poignées profilées (141), éventuellement multicouches, isolant de la tension.
